Europäisches Patentamt

European Patent Office

Office européen des brevets

(11) Publication number: **0 205 137**
A2

# EUROPEAN PATENT APPLICATION

(21) Application number: 86107816.0

(22) Date of filing: 07.06.86

(51) Int. Cl.⁴: **C 04 B 35/46**
H 01 B 3/12, H 01 G 4/12

(30) Priority: 14.06.85 US 744711
03.10.85 US 783624

(43) Date of publication of application:
17.12.86 Bulletin 86/51

(84) Designated Contracting States:
BE DE FR GB IT LU NL

(71) Applicant: E.I. DU PONT DE NEMOURS AND COMPANY
1007 Market Street
Wilmington Delaware 19898(US)

(72) Inventor: Sasaki, Kyoichi
109 Danforth Place
Wilmington Delaware 19810(US)

(74) Representative: von Kreisler, Alek, Dipl.-Chem. et al,
Deichmannhaus am Hauptbahnhof
D-5000 Köln 1(DE)

(54) Dielectric compositions.

(57) A composition for forming a densified dielectric body at low firing temperatures which is a mixture of finely divided particles of $BaTiO_3$, a metal oxide selected from $Nb_2O_5$, $Ta_2O_5$ and mixtures thereof, a rare earth oxide and a mixture of $MnO_2$ and another transition metal oxide.

EP 0 205 137 A2

TITLE                                    EL-0190A

## DIELECTRIC COMPOSITIONS

Field of Invention

The invention relates to dielectric compositions and particularly to low-firing temperature dielectric compositions.

Background of the Invention

Because of their high volumetric efficiency and thus their small size, multilayer ceramic capacitors (MLC's) are the most widely used form of ceramic capacitors. These capacitors are fabricated by stacking and cofiring thin sheets of ceramic dielectric materials on which an appropriate electrode pattern is printed. Each patterned layer is offset from the adjoining layers in such manner that the electrode layers are exposed alternately at each end of the assemblage. The exposed edges of the electrode pattern are coated with a conductive material which electrically connects all the layers of the structure, thus forming a group of parallel connected capacitors within the laminated structure. Capacitors of this type are frequently referred to as monolithic capacitors. Metallizations useful in producing conductors for multilayer capacitors normally comprise finely divided metal particles applied to the green tape in the form of a dispersion of such particles in an inert liquid vehicle.

The thin sheets of ceramic dielectric material used for the fabrication of MLC's are commonly referred to as "green tapes" and are comprised of a thin layer of finely divided dielectric particles which are bound together by an organic polymeric material. Unfired green tapes are prepared by slip casting a slurry of the dielectric particles dispersed in a solution of polymer, plasticizer and solvent onto a carrier surface, such as polypropylene, Mylar® polyester film or stainless steel, and then adjusting the thickness of the cast film by passing the cast slurry under a doctor blade.

Although the above-described "green tape" process is more widely used, there are nevertheless other procedures with which dielectric compositions of the invention can be used to make MLC's. One technique is the so called "wet process". In one aspect, this may involve passing a flat substrate through a falling sheet of dielectric slip one or more times to build up a dielectric layer (see Hurley et al., U.S. Pat. No. 3,717,487). Another way of carrying out the "wet process" is to brush a number of thin layers of dielectric slip onto a substrate to build up a thick dielectric layer (see Burn, U.S. Pat. No. 4,283,753).

Another method of making MLC's involves forming a paste of the dielectric material and then alternately screen printing the dielectric and metal layers with intervening drying steps until the designed structure is complete. A second electrode layer is then printed atop the dielectric layer(s) and the entire assemblage is cofired.

Monolithic multilayer capacitors are typically manufactured by cofiring barium titanate based formulations and conductive electrode materials in oxidizing atmospheres at temperatures of 1200-1400°C. This process yields durable, well sintered capacitors with high dielectric constant, e.g., greater than 1000. However firing under these conditions requires an electrode material with high melting point, good oxidation resistance at elevated temperatures, sinterability at the maturing temperature of the dielectric, and minimal tendency to interact with the dielectric at the sintering temperature. These requirements normally limit the choice of electrode materials to the noble metals platinum and palladium, or to alloys of platinum, palladium and gold. See also U.S. 3,872,360 to J. L. Sheard which is directed to the preparation of monolithic multilayer capacitors.

Significant savings in electrode costs could be realized if dielectric materials could be modified to (1) yield good dielectric properties (high dielectric constant and low dissipation factor) after firing in reducing atmospheres so that base metals could be used as electrodes, and/or (2) sinter at temperatures of 950°C or lower so that silver, which is significantly less costly than the other noble metals but has a lower melting point (962°C), could be used in electrode formation.

Attempts have been made to modify barium titanate ceramics so that they may be fired in reducing (e.g. hydrogen) or inert (e.g argon, nitrogen) atmospheres. The use of this approach has been somewhat limited in that the electrical properties, e.g., dielectric constant, dissipation factor, temperature coefficient of capacitance, etc., are compromised as compared with those of conventional air-fired compositions. In addition, maintaining an inert or reducing atmosphere involves an additional production cost as compared to firing in air. Exemplary of this approach is Buehler, U.S. Pat. No. 3,757,177, disclosing capacitors of base metal electrodes (e.g., Ni, Co, Fe) and modified barium titanate ($MnO_2$, $Fe_2O_3$, $CoO_2$, $CaZrO_3$) fired in an inert atmosphere about 1300°C (col. 3, lines 33-34).

Several attempts have been made to reduce the maturing temperature of dielectrics by mixing high temperature ferroelectric phases (titanates, zirconates, etc.) with glasses which mature at relatively low temperatures. Examples of this approach are given in Maher U.S. Pat. No. 3,619,220, Burn U.S. Pat. No. 3,638,084, Maher U.S. Pat. No. 3,682,766, and Maher U.S. Pat. No. 3,811,937. The drawback of this technique is that the dilution effect of the glass often causes the dielectric constant of the mixture to be relatively low.

Another technique for lowering the sintering temperature of titanate-based dielectrics is by the use of "sintering aids". Additions of bismuth oxide or bentonite to barium titanate lowers the maturing temperature to about 1200°C. (Nelson et al. U.S. Pat. No. 2,908,579). Maturing temperatures of 1200°-1290°C may be attained by addition of phosphates to titanates as described in Thurnauer et al. U.S. Pat. No. 2,626,220. However, in each of these cases, the decrease in maturing temperature is not sufficient to permit the use of cofired silver electrodes, and dielectric properties are often degraded.

There existed a need for a composition which would produce a high dielectric constant (e.g., 1000 or above) and low dissipation factor (e.g., less than 5%, preferably less than 2%) and sinters in air at low temperatures (e.g., less than 1000°C or less). This would permit cofiring with silver or palladium/silver electrodes and hence would greatly reduce the cost of high dielectric constant multilayer capacitors.

N. N. Krainik et al. (Soviet Physics-Solid State 2, 63-65, 1960) report solid solutions between, inter alia, $PbTiO_3$ and $PbMg_{0.5}W_{0.5}O_3$. Apparently a wide range of compositions with 0-80% $PbTiO_3$ was investigated (see FIG. 2). No suggestion was made as to the manufacture of multilayer capacitors. In a second article from the same laboratory, G. A. Smolenskii et al. (Soviet Physics-Solid State 3, 714, 1961) report investigating certain solid solutions, including those of Krainik et al. Firing was similarly done in a PbO vapor atmosphere. Phase transitions are discussed. In what is apparently a third article in this series, A. I. Zaslavskii et al. (Soviet Physics-Crystallography 7, 577, 1963), X-ray structural studies are reported.

Brixner U.S. Pat. No. 3,472,777 discloses the manufacture of ferroelectric ceramic disks by a two-step firing process. Each firing step is taught to occur in the range 800°-1200°C in air. In the sole example, firing was at 1050°C. Brixner discloses various dielectric compositions such as $PbMg_{1/3}Ti_{1/3}W_{1/3}O_3$ and Y-containing compositions.

More recently, Bouchard has approached the problem of dielectric compositions having low firing temperatures and dielectric constants as high as 6000 for use in Z5U-type capacitors. These substituted lead titanate compositions correspond to the following formula:

$(Sr_xPb_{1-x}TiO_3)_a(PbMg_rW_sO_3)_b$, wherein

| | | | |
|---|---|---|---|
| x | = 0-0.10 | r | = 0.45-0.55 |
| a | = 0.35-0.5 | s | = 0.55-0.45 and |
| b | = 0.5-0.65 | $\Sigma(r+s)$ | = 1, and |

$\Sigma(a+b)$ = 1.

Such materials are disclosed in U.S. Patents 4,048,546, 4,063,341, and 4,228,482 all to Bouchard.

Also, Thomas in U.S. Application S.N. 628,146, filed July 5, 1984, discloses related low-fire dielectric materials for Z5U service in which a = 0.45-0.6 and b = 0.5-0.65. More recently, U.K. Patent Application 2,115,400A discloses quite similar compositions which have low sintering temperatures corresponding to the formula: $PbTi_{1-x-y}Mg_xW_yO_3$, in which x and y range from 0.25 to 0.35. These materials are made by mixing the corresponding metal oxides and calcining the mixture at 700-750°C. The materials are sintered at 800-950°C which is below the melting point of silver. Some of the compositions of the U.K. application are identical in composition to those of Bouchard and are therefore expected to have the same properties.

Notwithstanding the substantial progress in attaining higher dielectric constants, the electronics industry foresees the need for dielectric composition having still higher dielectric constants (K) on the order of 2500 and even higher for X7R-type service.

Dielectric materials for X7R-type service find extensive use in electronic equipment for data processing, military applications, automotive applications, telecommunications and other applications in which the material is subjected to substantial changes in temperature, frequency and voltages. Among the properties which X7R dielectric materials must possess are a dissipation factor (DF) of no more than 2.5%, an insulation resistance (IR) of at least 1000ΩF and a thermal coefficient of capacitance (TCC) of no more than 15% within the range of -55 to +125°C.

Brief Description of the Invention

In view of the steadily more stringent requirements of the electronics industry for improved low-firing dielectrics, the invention is directed to barium titanate-based dielectric compositions suitable for X7R-type service having dielectric constants above 2000, especially 2500 and higher.

More particularly, the invention is directed in its primary aspect to a composition for forming a densified dielectric body at low firing temperatures which is a mixture of finely divided particles consisting essentially of:

(a)  99.2-99.95% wt. of an admixture of

    (1)  97.10-99.48 mole % $BaTiO_3$ having an average particle size of not more than 1.5 μm,

    (2)  2.00-0.52 mole % of a metal oxide selected from $Nb_2O_5$, $Ta_2O_5$ and mixtures thereof, and

    (3)  0-0.90 mole % of an oxide of a rare earth having an atomic number of 57-62 or mixtures thereof, and

(b)  0.8-0.05% wt. of a mixture of transition metal oxides having atomic numbers of 24-28, consisting essentially of 30-70 mole % $MnO_2$ and 70-30 mole % of the oxide of at least one other such transition metal.

In a second aspect, the invention is directed to a tape casting composition comprising the above-described dielectric composition dispersed in a solution of binder polymer in a volatile nonaqueous solvent.

In a third aspect, the invention is directed to a method of forming green tape by casting a thin layer of the above-described dispersion onto a flexible substrate, such as a steel belt or polymeric film, and heating the cast layer to remove the volatile solvent therefrom.

In a fourth aspect, the invention is directed to capacitors made by laminating and cofiring a plurality of the above-described green tape layers on which an appropriate electrode pattern has been printed in an offset manner such that the edges of the printed electrodes from alternating layers are exposed at opposite ends of the laminated structure and the exposed ends of the patterned electrodes are each connected electrically by means of a conductive coating thereon.

In a fifth aspect, the invention is directed to screen-printable thick film compositions comprising the above-described dielectric composition dispersed in organic medium.

Prior Art

Unexamined Japanese Patent Application 56-88876 discloses a dielectric composition consisting of 98.0-99.5 mole % $BaTiO_3$, and 0.25-1.0 mole % of both $Nd_2O_3$ and $Nb_2O_5$. It is disclosed that 0.5-0.4% wt. $MnO_2$ or $SiO_2$ can be added to the composition to improve sintering characteristics. The compositions were fired at 1200-1300°C.

DETAILED DESCRIPTION OF THE INVENTION

Barium Titanate

It is essential that only high purity barium titanate be used in the composition of the invention. By "high purity" is meant that the material contains no more than about 0.2% by weight of such impurities as $SiO_2$, $Al_2O_3$ and $Fe_xO_y$. If such impurities exceed about 0.2% by weight, the composition becomes difficult to sinter and the dielectric constant (K) is lowered.

In addition to the importance of its chemical purity, it is essential that the $BaTiO_3$ have very fine particle size. In particular, the average particle size of the BaTiO$_3$ must be no more than about 1.5 μm and preferably no more than 1.0 μm.

## Primary Metal Oxide

With respect to the primary metal oxides, Ta$_2$O$_5$ and Nb$_2$O$_5$, neither their purity nor their particle size is especially important within reasonable and practical limits. Thus, they need not be of such high purity as the BaTiO$_3$ and, furthermore, the primary metal oxide particles can be substantially larger. For example, such metal oxides can have an average particle size of up to 5 μm. Nevertheless, it is still preferred that the average particle size of the primary oxides be no larger than about 3 μm.

## Rare Earth Oxide

The rare earths contribute to improvement of all the electrical properties of the composition. However, their useful concentration is quite narrow. Though the presence of rare earth oxide is not always essential, it is nevertheless preferred to use at least 0.15 mole % rare earth oxide to improve electrical properties, in some instances K values, in other instances IR or TCC. On the other hand, if more than 0.9 mole % is used, such excessive concentrations also tend to lower K values. Thus, the concentration of rare earths in the composition of the invention is quite narrowly critical.

Rare earth oxides which are suitable for the invention are limited to those rare earths having atomic numbers of 57-62 of which samarium (Sm), neodymium (Nd) and praseodymium (Pr) are preferred. In a manner similar to the primary oxides, neither the purity nor particle size of the rare earth oxides is critical. Thus, the rare earth oxides, like the primary oxides, may have an average particle size of up to 5 μm, though no more than 3 μm is preferred.

Though the rare earth oxides can be used in concentrations as high as 0.9 mole %, it is nevertheless preferred that the total of the primary metal oxide and the rare earth be less than 2.0 mole % in order that the K and IR values of the capacitors made therefrom not be lowered excessively.

Transition Metal Oxide

If less than 30 mole % $MnO_2$ is used, the IR of the composition is likely to be too low and if more than 70 mole % $MnO_2$ is used, TCC values tend to become too high. Thus, it is preferred that the $MnO_2$ constitute 30-70 mole % of the total of the transition metal oxides.

The transition metal oxides for use in the invention are those of transition metals having atomic numbers of 24-28. It is essential that the mixture of transition metal oxides be comprised of $MnO_2$ and at least one other such transition metal oxide of which NiO is preferred.

Fluxing Agent

Though not essential, it may often be preferred to add to the dielectric compositions of the invention a small amount of fluxing agent for the purpose of lowering the sintering temperature of the composition. As used herein, the term "flux" or "fluxing agent" refers to inorganic materials which are glass formers below the sintering temperature of the $BaTiO_3$. Such materials will be most frequently utilized when it is desired to lower the firing temperature of the composition below about 1100°C. Suitable fluxing agents are vitreous at the firing temperature and have relatively low viscosity.

Furthermore, they are at least partial solvents for the $BaTiO_3$ during firing. Appropriate fluxing agents include, but are not limited to, bismuth oxide, lithium tetraborate, cadmium borate, cadmium borosilicate, lead borosilicate, and lithium metaborate. It will also be recognized that stoichiometrically appropriate mixtures of the corresponding oxides can also be used. For example, a mixture of CdO and $B_2O_3$ can be used as a precursor for cadmium borate which is formed upon firing the composition. Mixtures of various fluxing agents can, of course, be used of which the mixture of 35-65 mole % lithium tetraborate and 65-35 mole % bismuth oxide is particularly preferred. When fluxes are used in the composition of the invention, they will be used in concentrations of 0.1-1.5% wt. basis the total weight of component mixtures (a) and (b). A flux concentration of 0.3-1.0% wt. is preferred. Within these concentration limits, the sintering temperature of the composition can be lowered without also excessively lowering the K value as well.

Organic Medium

Regardless of which method of application may be used, the above-described mixture of organic solids must be dispersed in an organic medium. Though occasionally water-based media can be used, the organic medium most commonly used will be for the purpose of making either green tape casting solutions or thick film pastes.

A.  Green Tape Casting Solutions

As mentioned above, green tapes of the dielectric composition of the invention are made by casting a dispersion of the dielectric material in a solution of polymeric binder and volatile organic solvent onto a flexible substrate, such as a steel belt or polymeric film, and then heating the cast layer to remove the volatile solvent therefrom.

The organic medium in which the ceramic solids are dispersed consists of the polymeric binder which is dissolved in a volatile organic solvent and, optionally, other dissolved materials such as plasticizers, release agents, dispersing agents, stripping agents, antifouling agents and wetting agents.

To obtain better binding efficiency, it is preferred to use at least 5% vol. polymer binder for 95% vol. ceramic solids. On the order of 25-35% vol. binder for 75-65% vol. ceramic solids is further preferred. It is desirable to use the least possible amount of binder vis-à-vis solids in order to reduce the amount of organics which must be removed by pyrolysis.

In the past, various polymeric materials have been employed as the binder for green tapes, e.g., poly(vinyl butyral), poly(vinyl acetate), poly(vinyl alcohol), cellulosic polymers such as methyl cellulose, ethyl cellulose, hydroxyethyl cellulose, methylhydroxyethyl cellulose, atactic polypropylene, polyethylene, silicon polymers such as poly(methyl siloxane), poly(methylphenyl siloxane), polystyrene, butadiene/styrene copolymer, polystyrene, poly(vinyl pyrollidone), polyamides, high molecular weight polyethers, copolymers of ethylene oxide and propylene oxide, polyacrylamides, and various acrylic polymers such as sodium polyacrylate, poly (lower alkyl acrylates), poly(lower alkyl methacrylates), and various copolymers and multipolymers of lower alkyl acrylates and methacrylates. Copolymers of ethyl methacrylate and methyl acrylate and terpolymers of ethyl acrylate, methyl methacrylate and methacrylic acid have been previously used as binders for slip casting materials.

More recently, Usala, in U.S. Patent Application S.N. 501,978, filed June 7, 1983, has disclosed an organic binder which is a mixture of compatible multipolymers of 0-100% wt. $C_{1-8}$ alkyl methacrylate, 100-0% wt. $C_{1-8}$ alkyl acrylate and 0-5% wt. ethylenically unsaturated carboxylic acid or amine. Because the polymers permit the use of minimum amounts of binder and maximum amounts of dielectric solids, their use is preferred with the dielectric composition of this invention. For this reason, the disclosure of the above-referred Usala application is incorporated by reference herein.

The solvent component of the casting solution is chosen so as to obtain complete solution of the polymer and sufficiently high volatility to enable the solvent to be evaporated from the dispersion by the application of relatively low levels of heat at atmospheric pressure. In addition, the solvent must boil well below the boiling point and decomposition temperature of any other additives contained in the organic medium. Thus, solvents having atmospheric boiling points below 150°c are used most frequently. Such solvents include benzene, acetone, xylene, methanol, ethanol, methyl ethyl ketone, 1,1,1-trichloroethane, tetrachloroethylene, amyl acetate, 2,2,4-triethyl pentanediol-1,3-monoisobutyrate, toluene and methylene chloride.

Frequently, the organic medium will also contain a small amount, relative to the binder polymer, of a plasticizer which serves to lower the glass transition temperature (Tg) of the binder polymer. However, the use of such materials should be minimized in order to reduce the amount of organic materials which must be removed when the films cast therefrom are fired. The choice of plasticizers is, of course, determined primarily by the polymer which must be modified. Among the plasticizers which have been used in various binder systems are diethyl phthalate, dibutyl phthalate, octyl phthalate, butyl benzyl phthalate, alkyl phosphates, polyalkylene glycols, glycerol, poly(ethylene oxides), hydroxy-ethylated alkyl phenol, dialkyldithiophosphonate and poly(isobutylene). Of these, butyl benzyl phthalate is most frequently used in acrylic polymer systems because it can be used effectively in relatively small concentrations.

B.    Thick Film Paste

Often it may be desired to apply the compositions of the invention as a thick film paste by such techniques as screen printing. When the dispersion is to be applied as a thick film paste, conventional thick film organic media can be used with appropriate rheological adjustments and the use of lower volatility solvents. In this event, the compositions must have appropriate viscosity so that they can be passed through the screen readily. In addition, they should be thixotropic in order that they set up rapidly after being screened, thereby giving good resolution. While the rheological properties are of primary importance, the organic medium is preferably formulated also to give appropriate wettability of the solids and the substrate, good drying rate, dried film strength sufficient to withstand rough handling and good firing properties. Satisfactory appearance of the fired composition is also important.

In view of all these criteria, a wide variety of inert liquids can be used as organic medium. The organic medium for most thick film compositions is typically a solution of resin in a solvent and, frequently, a solvent solution containing both resin and thixotropic agent. The solvent usually boils within the range of 130-350°C.

Especially suitable resins for this purpose are polymethacrylates of lower alcohols and monobutyl ether of ethylene glycol monoacetate.

The most widely used solvents for thick film applications are terpenes such as alpha- or beta-terpineol or mixtures thereof with other solvents such as kerosene, dibutylphthalate, butyl carbitol, butyl carbitol acetate, hexylene glycol and high boiling alcohols and alcohol esters. Various combinations of these and other solvents are formulated to obtain the desired viscosity and volatility requirements for each application.

Among the thixotropic agents which are commonly used are hydrogenated castor oil and derivatives thereof. It is, of course, not always necessary to incorporate a thixotropic agent since the solvent/resin properties coupled with the shear thinning inherent in any suspension may alone be suitable in this regard.

The ratio of organic medium to inorganic solids in the dispersions can vary considerably and depends upon the manner in which the dispersion is to be applied and the kind of organic medium used. Normally, to achieve good coverage, the dispersions will contain complementally by weight 60-90% solids and 40-10% organic medium. Such dispersions are usually of semifluid consistency and are referred to commonly as "pastes".

The pastes are conveniently prepared on a three-roll mill. The viscosity of the pastes is typically within the following ranges when measured at room temperature on Brookfield viscometers at low, moderate and high shear rates:

| Shear Rate (Sec$^{-1}$) | Viscosity (Pa.s) | |
|---|---|---|
| 0.2 | 100-5000 | – |
| | 300-2000 | Preferred |
| | 600-1500 | Most preferred |
| 4 | 40-400 | – |
| | 100-250 | Preferred |
| | 140-200 | Most preferred |
| 384 | 7-40 | – |
| | 10-25 | Preferred |
| | 12-18 | Most preferred |

The amount and type of organic medium (vehicle) utilized is determined mainly by the final desired formulation viscosity and print thickness.

Formulation

Basically, the compositions of the invention are formulated merely by mixing the inorganic solids with the organic medium in a mixing apparatus such as a ball mill. Two or more of the inorganic solids may be premixed before addition to the organic medium, but the sequence and manner of mixing are not critical so long as uniform mixing and dispersion are obtained. However, to obtain a higher degree of mixing uniformity, it is preferred to premix the materials with water, mill the mixture and then dry it. After this the uniform mixture is mixed with organic medium. In the examples which follow, the compositions were formulated by adding all of the inorganic solids to the organic medium and then mixing.

Capacitor Processing

As described above, many multilayer capacitors are fabricated by printing on electrode metallization in the desired pattern upon a dielectric substrate which is a green tape. The printed dielectric substrates are stacked, laminated and cut to form the desired capacitor structures. The green dielectric material is then heated to effect removal of the organic medium from the electrode material and of the organic binder from the dielectric material. The removal of these materials is accomplished by a combination of evaporation and thermal decomposition during the firing operation. In some instances it may also be desirable to interpose a preliminary drying step prior to firing.

When firing the above-described capacitor assemblages, it is preferred to employ a first firing step in which the assemblage is heated slowly to 100-550°C, which will be effective to remove all of the organic material without damage to the laminated assemblage. Typically the organic burnout period is 18-24 hours to assure complete removal of organics. When this has been completed, the assemblage is then heated more rapidly to the desired sintering temperature.

The desired sintering temperature is determined by the physical and chemical characteristics of the dielectric material. Ordinarily the sintering temperature will be chosen to obtain maximum densification of the dielectric material. However, it will be recognized by those skilled in the art of fabricating capacitors that maximum densification is not always needed. Therefore, the term "sintering temperature" refers to the temperature (and implicitly the amount of time as well) to obtain the desired degree of densification of the dielectric material for the particular capacitor application. Sintering times also vary with the dielectric composition but ordinarily on the order of two hours at the sintering temperature is preferred.

Upon completion of sintering, the rate of cooling to ambient temperature is carefully controlled in accordance with the resistance of the components to thermal shock.

The following properties which are relevant to the ability of a given capacitor to function properly are referred to in the examples.

Capacitance

Capacitance is a measure of the capability of a material to store an electrical charge expressed mathematically, $C = KAN$ divided by t, where K is dielectric constant, A equals area overlap of electrodes, N is number of dielectric layers, and t is thickness of dielectric layer.

The units of capacitance are farads or fractions thereof such as microfarads ($10^{-6}$ farad), nanofarads ($10^{-9}$ farad) or picrofarads ($10^{-12}$ farad).

Dissipation Factor

Dissipation Factor (DF) is a measure of the phase difference between voltage and current. In a perfect capacitor the phase difference would be 90°. However, in practical dielectric systems, this phase difference is less than 90° by an amount ($\Delta$) because of leakage and relaxation losses. In particular, DF is the tangent of the angle $\Delta$.

Insulation Resistance

Insulation Resistance (IR) is a measure of the ability of a charged capacitor to withstand leakage in DC current. Insulation resistance is a constant for any given dielectric regardless of capacitance.

In the examples which follow, simple single layer capacitors having green thicknesses of 30-35 mils (762-889 μm) were prepared by stacking and then laminating an appropriate number of green tapes by pressing at about 2,000 psi (140 kg/cm$^2$). The dielectric laminant was cut into 0.5 x 0.5" (1.3 x 1.3 cm) squares. Twelve such squares were prepared from each composition and tested. After being cut into such squares, each was heated to effect burnout of the organics. The firing profile after burnout was (1) 3 hours up to firing temperature, (2) 2 hours at the firing temperature, and (3) 3 hours to exit from the furnace. Upon cooling the fired dielectrics, a silver electrode was applied on both sides of the laminant thus forming a single capacitor which is referred to as a K-square. The K-squares were tested for dielectric constant (K), dissipation factor (DF), insulation resistance (IR) and both cold and hot temperature coefficient of capacitance (CTCC and HTCC, respectively). Temperature coefficient of capacitance is a measure of the percentage change in capacitance incurred upon heating a material over a specified range of temperature. In the case of CTCC, the temperature range is -55° to 25°C and for HTCC, the temperature range is 25°C to 125°C. A TCC, either hot or cold, of 15% or less is considered to be satisfactory. If either value is substantially above 15%, the part is unsatisfactory for X7R specification use.

The following examples and comparative showings are presented to illustrate the advantage of the present invention.

## EXAMPLES

### Examples 1-37

A series of 37 dielectric mixtures having various compositions was prepared and formed into green tapes as described above. These green tapes were then used to form single layer capacitors (K-squares) and the electrical properties of the capacitors made therefrom were determined. The composition of the inorganic portion of these materials and the electrical properties of the capacitors made therefrom are given in Table 1 below.

## Table 1

### Effect of Compositional Variations on Electrical Properties of Dielectric Materials

| Example No. | 1 | 2 | 3 | 4 |
|---|---|---|---|---|
| **Composition** | | | | |
| (a) % wt. (1), (2) and (3) | 99.60 | 99.80 | 99.70 | 99.70 |
| (1) $BaTiO_3$, mole % | 98.83 | 99.20 | 98.90 | 98.50 |
| (2) $Nb_2O_5$, mole % | 0.70 | 0.80 | 0.90 | 0.90 |
| (3) Rare Earth, mole % | 0.47 | – | 0.20 | 0.60 |
| Composition | $Sm_2O_3$ | – | $Sm_2O_3$ | $Sm_2O_3$ |
| (b) % wt. Transition Metal Oxides (TMO) | 0.40 | 0.20 | 0.30 | 0.30 |
| $MnO_2$, mole % | 46.3 | 46.3 | 30.0 | 30.0 |
| Other TMO, mole % | 53.7 | 53.7 | 70.0 | 70.0 |
| Composition | NiO | NiO | NiO | NiO |
| Firing Temperature, °F | 2250 | 2250 | 2270 | 2245 |
| **Electrical Properties** | | | | |
| K | 3110 | 2560 | 3070 | 3060 |
| DF, % | 0.96 | 0.80 | 1.29 | 1.61 |
| IR, $\Omega$-farads | 2830 | 4750 | 4320 | 5160 |
| HTCC, % | –4 | –11.2 | –5.0 | –4.0 |
| CTCC, % | –12 | +3.5 | –5.7 | –11.0 |

Table 1 - continued

| Example No. | 5 | 6 | 7 | 8 |
|---|---|---|---|---|
| Composition | | | | |
| (a) % wt. (1), (2) and (3) | 99.70 | 99.60 | 99.80 | 99.70 |
| (1) $BaTiO_3$, mole % | 98.60 | 98.09 | 98.50 | 98.10 |
| (2) $Nb_2O_5$, mole % | 1.20 | 1.10 | 1.50 | 1.50 |
| (3) Rare Earth, mole % | 0.20 | 0.81 | – | 0.40 |
| Composition | $Sm_2O_3$ | $Sm_2O_3$ | – | $Sm_2O_3$ |
| (b) % wt. Transition Metal Oxides (TMO) | 0.30 | 0.40 | 0.20 | 0.30 |
| $MnO_2$, mole % | 30.0 | 46.3 | 46.3 | 63.3 |
| Other TMO, mole % | 70.0 | 53.7 | 53.7 | 36.7 |
| Composition | NiO | NiO | NiO | NiO |
| Firing Temperature, °F | 2245 | 2240 | 2280 | 2240 |
| Electrical Properties | | | | |
| K | 2490 | 2630 | 2460 | 2510 |
| DF, % | 0.97 | 0.92 | 0.52 | 0.74 |
| IR, $\Omega$–farads | 10.400 | 2690 | 3990 | 2350 |
| HTCC, % | −9.0 | −2.1 | −12.0 | −12.0 |
| CTCC, % | −3.0 | −8.6 | −2.8 | −6.4 |

Table 1 - continued

| Example No. | 9 | 10 | 11 | 12 |
|---|---|---|---|---|
| Composition | | | | |
| (a) % wt. (1), (2) and (3) | 99.70 | 99.70 | 99.70 | 99.70 |
| (1) $BaTiO_3$, mole % | 98.00 | 99.30 | 98.50 | 98.0 |
| (2) $Nb_2O_5$, mole % | 1.80 | 0.50 | 0.50 | 1.00 |
| (3) Rare Earth, mole % | 0.20 | 0.20 | 1.00 | 1.00 |
| Composition | $Sm_2O_3$ | $Sm_2O_3$ | $Sm_2O_3$ | $Sm_2O_3$ |
| (b) % wt. Transition Metal Oxides (TMO) | 0.30 | 0.30 | 0.30 | 0.30 |
| $MnO_2$, mole % | 30.0 | 30.0 | 30.0 | 30.0 |
| Other TMO, mole % | 70.0 | 70.0 | 70.0 | 70.0 |
| Composition | NiO | NiO | NiO | NiO |
| Firing Temperature, °F | 2270 | 2270 | 2270 | 2270 |

| Electrical Properties | | | | |
|---|---|---|---|---|
| K | 2225 | 3340 | 3410 | 3260 |
| DF, % | 1.35 | 1.95 | 3.90 | 2.72 |
| IR, $\Omega$-farads | 5480 | 6450 | 940 | 5040 |
| HTCC, % | −5.5 | −26.0 | −24.0 | −9.8 |
| CTCC, % | −7.4 | −13.0 | −13.0 | −23.7 |

Table 1 - continued

| Example No. | 13 | 14 | 15 | 16 |
|---|---|---|---|---|
| **Composition** | | | | |
| (a) % wt. (1), (2) and (3) | 99.60 | 100.00 | 99.60 | 99.60 |
| (1) $BaTiO_3$, mole % | 98.81 | 98.81 | 99.0 | 98.73 |
| (2) $Nb_2O_5$, mole % | 0.79 | 0.79 | 0.79 | 0.79 |
| (3) Rare Earth, mole % Composition | 0.40 $Sm_2O_3$ | 0.40 $Pr_6O_{11}$ | 0.21 $Pr_6O_{11}$ | 0.48 $Pr_6O_{11}$ |
| (b) % wt. Transition Metal Oxides (TMO) | 0.40 | – | 0.40 | 0.40 |
| $MnO_2$, mole % | 46.3 | – | 46.3 | 46.3 |
| Other TMO, mole % Composition | 53.7 NiO | – | 53.7 NiO | 53.7 NiO |
| Firing Temperature, °F | 2250 | 2260 | 2255 | 2275 |
| **Electrical Properties** | | | | |
| K | 3020 | 3372 | 2870 | 2850 |
| DF, % | 0.82 | 2.74 | 0.71 | 0.78 |
| IR, $\Omega$-farads | 2560 | 1490 | 2960 | 2510 |
| HTCC, % | 3.3 | -34.2 | -11.1 | -0.8 |
| CTCC, % | -9.5 | -8.5 | -11.6 | 7.87 |

Table 1 - continued

| Example No. | 17 | 18 | 19 | 20 |
|---|---|---|---|---|
| **Composition** | | | | |
| (a) % wt. (1), (2) and (3) | 99.60 | 99.60 | 99.60 | 99.60 |
|    (1) $BaTiO_3$, mole % | 98.46 | 98.11 | 98.38 | 98.81 |
|    (2) $Nb_2O_5$, mole % | 1.06 | 1.41 | 1.41 | 0.79 |
|    (3) Rare Earth, mole % | 0.48 | 0.48 | 0.21 | 0.40 |
|    Composition | $Pr_6O_{11}$ | $Pr_6O_{11}$ | $Pr_6O_{11}$ | $Pr_6O_{11}$ |
| (b) % wt. Transition Metal Oxides (TMO) | 0.40 | 0.40 | 0.40 | 0.40 |
|    $MnO_2$, mole % | 46.3 | 46.3 | 46.3 | 46.3 |
|    Other TMO, mole % | 53.7 | 53.7 | 53.7 | 53.7 |
|    Composition | NiO | NiO | NiO | NiO |
| Firing Temperature, °F | 2255 | 2275 | 2275 | 2330 |
| **Electrical Properties** | | | | |
| K | 2495 | 2030 | 2130 | 2870 |
| DF, % | 1.03 | 0.96 | 0.36 | 1.01 |
| IR, $\Omega$-farads | 3590 | 1840 | 1810 | 6620 |
| HTCC, % | −5.1 | −4.1 | −9.0 | −4.8 |
| CTCC, % | −7.0 | −11.1 | −11.1 | −3.3 |

Table 1 - continued

| Example No. | 21 | 22 | 23 | 24 |
|---|---|---|---|---|
| **Composition** | | | | |
| (a) % wt. (1), (2) and (3) | 99.60 | 99.60 | 99.60 | 100.00 |
| (1) $BaTiO_3$, mole % | 98.81 | 98.81 | 98.81 | 98.81 |
| (2) $Nb_2O_5$, mole % | 0.79 | 0.79 | 0.79 | 0.79 |
| (3) Rare Earth, mole % | 0.40 | 0.40 | 0.40 | 0.40 |
| Composition | $CeO_2$ | $Nd_2O_3$ | (1) | $Pr_6O_{11}$ |
| (b) % wt. Transition Metal Oxides (TMO) | 0.40 | 0.40 | 0.40 | – |
| $MnO_2$, mole % | 46.3 | 46.3 | 46.3 | – |
| Other TMO, mole % | 53.7 | 53.7 | 53.7 | – |
| Composition | NiO | NiO | NiO | – |
| Firing Temperature, °F | 2330 | 2330 | 2270 | 2255 |
| **Electrical Properties** | | | | |
| K | 2970 | 3030 | 2680 | 3657 |
| DF, % | 0.95 | 1.09 | 0.79 | 3.22 |
| IR, $\Omega$-farads | ∞ | 2830 | 2500 | 140 |
| HTCC, % | -2.5 | -3.9 | -4.1 | -35.1 |
| CTCC, % | -11.2 | -12.2 | -6.1 | -21.4 |

(1) Mixed rare earth oxides: by weight 60% $La_2O_3$, 21.5% $Nd_2O_3$, 10.0% $CeO_2$, 7.5% $Pr_6O_{11}$, 1.0% other rare earths.

Table 1 - continued

| Example No. | 25 | 26 | 27 | 28 |
|---|---|---|---|---|
| **Composition** | | | | |
| (a) % wt. (1), (2) and (3) | 99.80 | 99.80 | 99.70 | 99.70 |
| (1) $BaTiO_3$, mole % | 98.81 | 98.81 | 98.81 | 98.81 |
| (2) $Nb_2O_5$, mole % | 0.79 | 0.79 | 0.79 | 0.79 |
| (3) Rare Earth, mole % | 0.40 | 0.40 | 0.40 | 0.40 |
| Composition | $Pr_6O_{11}$ | $Pr_6O_{11}$ | $Pr_6O_{11}$ | $Pr_6O_{11}$ |
| (b) % wt. Transition Metal Oxides (TMO) | 0.20 | 0.20 | 0.30 | 0.30 |
| $MnO_2$, mole % | – | 100.0 | 30.0 | 63.3 |
| Other TMO, mole % | 100.0 | – | 70.0 | 36.7 |
| Composition | NiO | – | NiO | NiO |
| Firing Temperature, °F | 2255 | 2255 | 2270 | 2270 |
| **Electrical Properties** | | | | |
| K | 3144 | 3292 | 3028 | 3143 |
| DF, % | 2.09 | 1.61 | 1.51 | 1.09 |
| IR, $\Omega$-farads | 820 | 4430 | 6830 | 5040 |
| HTCC, % | −7.8 | −22.8 | −5.6 | −10.1 |
| CTCC, % | −12.6 | −16.9 | −9.5 | −11.6 |

Table 1 - continued

| Example No. | 29 | 30 | 31 |
|---|---|---|---|
| **Composition** | | | |
| (a) % wt. (1), (2) and (3) | 99.70 | 99.70 | 99.70 |
| (1) $BaTiO_3$, mole % | 98.81 | 98.81 | 98.81 |
| (2) $Nb_2O_5$, mole % | 0.79 | 0.79 | 0.79 |
| (3) Rare Earth, mole % Composition | 0.40 $Pr_6O_{11}$ | 0.40 $Pr_6O_{11}$ | 0.40 $Pr_6O_{11}$ |
| (b) % wt. Transition Metal Oxides (TMO) | 0.30 | 0.30 | 0.30 |
| $MnO_2$, mole % | 30.1 | 64.8 | 46.6 |
| Other TMO, mole % Composition | 69.9 CoO | 35.2 $Fe_2O_3$ | 53.4 $Cr_2O_3$ |
| Firing Temperature, °F | 2270 | 2250 | 2250 |
| **Electrical Properties** | | | |
| K | 2930 | 3205 | 3160 |
| DF, % | 1.09 | 1.65 | 1.75 |
| IR, $\Omega$-farads | 7400 | 3090 | 2470 |
| HTCC, % | -2.7 | -2.7 | -10.9 |
| CTCC, % | -10.3 | -11.2 | -14.6 |

## Table 1 - continued

| Example No. | 32 | 33 | 34 | 35 |
|---|---|---|---|---|
| **Composition** | | | | |
| (a) % wt. (1), (2) and (3) | 99.60 | 99.60 | 99.60 | 99.60 |
|    (1) $BaTiO_3$, mole % | 98.84 | 98.64 | 99.24 | 99.03 |
|    (2) $Nb_2O_5$, ($Ta_2O_5$) mole % | (0.75) | (0.75) | (0.56) | (0.56) |
|    (3) Rare Earth, mole % | 0.41 | 0.61 | 0.20 | 0.41 |
|       Composition | $Sm_2O_3$ | $Sm_2O_3$ | $Sm_2O_3$ | $Sm_2O_3$ |
| (b) % wt. Transition Metal Oxides (TMO) | 0.40 | 0.40 | 0.40 | 0.40 |
|    $MnO_2$, mole % | 46.3 | 46.3 | 46.3 | 46.3 |
|    Other TMO, mole % | 53.7 | 53.7 | 53.7 | 53.7 |
|       Composition | NiO | NiO | NiO | NiO |
| Firing Temperature, °F | 2280 | 2235 | 2320 | 2320 |

**Electrical Properties**

| | | | | |
|---|---|---|---|---|
| K | 3062 | 2921 | 2700 | 3030 |
| DF, % | 1.24 | 1.45 | 1.05 | 1.65 |
| IR, $\Omega$-farads | 4400 | 3810 | 2260 | 4380 |
| HTCC, % | -11.7 | -5.5 | -5.5 | -8.1 |
| CTCC, % | -13.6 | -13.3 | -5.7 | -6.7 |

30

Examples 1-9 in general show that the addition of the rare earth component to the composition raises the K value. This can be seen particularly well by comparing Example 2 with Examples 1, 3 and 4. Examples 5-8 show that as the amount of Nb is raised, the K value tends to be lowered. Nevertheless, the effect of the rare earth in raising K value is still evident. Example 9 illustrates that the use of very high Nb concentrations may lower K excessively.

Examples 10-12 show that if the amount of Nb is too low, the HTCC value of the capacitor becomes more highly negative. In particular, Examples 10 and 11, which are low in Nb, have poor HTCC. On the other hand, when the Nb is too high, K tends to be degraded. For this reason, it is preferred that at least 0.52 mole % Nb be used, but not more than 2.0 mole %.

Example 12 is of interest in that it shows that if the total of the Nb and the rare earth is above about 2.0 mole %, the CTCC is likely to be too highly negative.

Examples 13 and 15 illustrate the functional equivalence of Sm and Pr.

Examples 14 and 15 show the necessity of the transition metal to obtain good HTCC, but that the amount must be limited to avoid too much lowering of the K value.

Examples 15-19 show usefulness of Pr to replace Sm. In particularly, Examples 15 and 16 exhibit good TCC values. However, Examples 17-19 show the adverse effect on K if the concentration of Nb is too high.

Examples 20-23 show the general suitability of other rare earths for use in the composition of the invention.

Example 24 shows that if no transition metal oxide is used, both HTCC and CTCC are too negative, IR is lowered and DF is undesirably high. Example 25 shows the need for the second transition metal in order to obtain adequately high IR values. Similarly, Example 26 shows that if the second transition metal is present but $MnO_2$ is absent, then both HTCC values are adversely affected. In contrast, Examples 27 and 28 which contain both $MnO_2$ and NiO exhibit good electrical properties throughout.

Examples 29-31 show that the transition metals Co, Fe and Cr are functionally equivalent to Ni in the composition of the invention. The Fe and Cr tend to lower IR but not so much as to make them impractical for most applications. (IR values of 2,000 or higher are quite satisfactory for almost all current uses.)

Examples 32-35 show that Ta is functionally equivalent to Nb in the compositions of the invention. Example 34 shows that lowering the amount of rare earth tends to lower both K and IR.

Examples 36 and 37

Two sets of compositions were prepared in which a small amount of $SiO_2$ was added to illustrate the adverse effect of impurities in the $BaTiO_3$.

## Table 2

### Effect of $BaTiO_3$ Impurities on
### Electrical Properties of Dielectric Materials

| Example No. | 36 | 37 |
|---|---|---|
| **Composition** | | |
| (a) % wt. (1), (2) and (3) | 99.20 | 98.80 |
|     (1) $BaTiO_3$, mole % | 98.49 | 98.49 |
|     (2) $Nb_2O_5$, mole % | 0.53 | 0.53 |
|     (3) Rare Earth, mole % | 0.98 | 0.98 |
|        Composition | $Nd_2O_3$ | $Nd_2O_3$ |
| (b) % wt. Transition Metal Oxides (TMO) | 0.80 | 1.20 |
|     $MnO_2$, mole % | 19.2 | 13.3 |
|     $NiO/SiO_2$ mole % | 69.6/11.2 | 48.2/38.5 |
| Firing Temperature, °F | 2400 | 2400 |
| **Electrical Properties** | | |
| K | 2300 | 2300 |
| DF, % | 1.74 | 1.29 |
| IR, $\Omega$-farads | 1120 | 530 |
| HTCC, % | −0.2 | +8.2 |
| CTCC, % | −18.6 | −13.8 |

The data in Table 2 show the importance of using only $BaTiO_3$ which has quite low levels of impurities which in this case are represented by $SiO_2$ which is a common impurity in $BaTiO_3$. In particularly, CTCC is marginal and IR is completely unacceptable because of poor sintering.

Examples 38-40

A series of three compositions in accordance with the invention was formulated and used to prepare green tapes in the manner described above and two of the compositions well known fluxing agents were added to observe their effect on the electrical properties of the MLC's made therefrom. As would be expected the data on these devices in Table 3 show that the firing temperature could be reduced substantially with a concomitant lowering of K. Nevertheless, all electrical properties were satisfactory for most purposes.

## Table 3

### Effect of Flux Addition on Electric Properties of Simple Capacitors

| Example No. | 38 | 39 | 40 |
|---|---|---|---|
| Composition | | (% by weight) | |
| $BaTiO_3$ | 98.1 | 97.3 | 98.8 |
| $Nb_2O_5$ | 0.9 | 0.9 | 0.9 |
| $Sm_2O_3$ | 0.7 | 0.7 | 0.7 |
| NiO | 0.15 | 0.15 | 0.15 |
| $MnO_2$ | 0.15 | 0.15 | 0.15 |
| $Bi_2O_3$ | – | 0.3 | 0.4 |
| $Li_2B_4O_7$ | – | 0.5 | – |
| Cadmium borosilicate frit | – | – | 0.9 |
| Firing Temperature, °F | 2240 | 2010 | 2025 |
| Electrical Properties | | | |
| K | 3200 | 2140 | 2230 |
| DF, % | 1.2 | 1.2 | 1.4 |
| IR, $\Omega$–farads | 3100 | >6000 | 5100 |
| HTCC, % | –14 | +1.5 | –7 |
| CTCC, % | –11 | –7 | –7 |

Examples 39 and 40 show the addition of a fluxing agent ($Bi_2O_3$) to the composition of the invention in order to lower the sintering temperature. As would be expected, there was some lowering of K therefrom.

Examples 41-43

In this example a multilayer capacitor and two equivalent K-squares were made using the composition of the invention and tested.

A powder mixture was prepared by mixing the ingredients with water, milling, and drying. The dried mixture was mixed with organic medium to form a casting solution. This casting mixture was then used to form a green tape by the method described hereinabove and the green tape was used to form both single layer green K-squares and five-layer MLC green "chips". The internal electrode material for the MLC's was 70/30 Ag/Pd. The composition of the dielectric material, format, firing temperature and electrical properties are given in Table 4 below. All electrical properties were satisfactory. As would be expected, the calculated K values for the MLC chips were higher than the K values for the corresponding K squares.

## Table 4

### Electrical Properties of Simple
### Compositions and Multilayer Capacitors

| Example No. | 41 | 42 | 43 |
|---|---|---|---|
| Format | K-Square | K-Square | MLC |

Composition

| | | | |
|---|---|---|---|
| (a) % wt. (1), (2) and (3) | 99.2 | 99.2 | 99.2 |
| (1) $BaTiO_3$, mole % | 98.73 | 98.73 | 98.73 |
| (2) $Nb_2O_5$, mole % | 0.80 | 0.80 | 0.80 |
| (3) $Sm_2O_3$, mole % | 0.47 | 0.47 | 0.47 |
| (b) % wt. Transition Metal Oxides (TMO) | 0.3 | 0.3 | 0.3 |
| $MnO_2$, mole % | 30.0 | 30.0 | 30.0 |
| NiO, mole % | 70.0 | 70.0 | 70.0 |
| (c) $Li_2B_4O_7$ % wt. | 0.5 | 0.5 | 0.5 |

| Firing Temperature, °F | 1980 | 2010 | 1950 |
|---|---|---|---|

Electrical Properties

| | | | |
|---|---|---|---|
| K | 2220 | 2385 | 3080 |
| DF, % | 0.38 | 0.40 | 0.76 |
| IR, $\Omega$-farads | 6,350 | 13,200 | 5,820 |
| HTCC, % | −7.5 | −8.3 | −7.8 |
| CTCC, % | −6.0 | −5.1 | −4.1 |

All electrical properties were satisfactory for most purposes. As would be expected, the calculated K values for the MLC chips were higher than the K values for the corresponding K squares.

CLAIMS

1. A composition for forming a densified dielectric body at low firing temperatures which is a mixture of finely divided particles consisting essentially of:

(a) 99.2-99.95% wt. of an admixture of

   (1) 97.10-99.48 mole % $BaTiO_3$ having an average particle size of not more than 1.5 μm,

   (2) 2.00-0.52 mole % of a metal oxide selected from $Nb_2O_5$, $Ta_2O_5$ and mixtures thereof, and

   (3) 0-0.90 mole % of an oxide of a rare earth having an atomic number of 57-62 or mixtures thereof, and

(b) 0.8-0.05% wt. of a mixture of transition metal oxides having atomic numbers of 24-28 consisting essentially of 30-70 mole % $MnO_2$ and 70-30 mole % of the oxide of at least one other such transition metal.

2. The composition of claim 1 which also contains 0.1-1.5% wt. of a fluxing agent, basis total weight of (a) and (b).

3. The composition of claim 2 in which the fluxing agent is selected from cadmium borate, lithium borate, cadmium borosilicate, bismuth oxide, lead borosilicate and mixtures and precursors thereof.

4. The composition of claim 1 in which the mixture of finely divided solids is dispersed in an organic medium.

5. The composition of claim 4 in which the organic medium is comprised of a polymeric binder dissolved in organic solvent.

6. The composition of claim 4 in which the organic solvent is a volatile solvent and the dispersion is a castable consistency.

7.  A dielectric green tape comprising a layer of the composition of claim 7 from which the volatile solvent has been removed.

8.  A capacitor comprising a plurality of layers of the green tape of claim 7 having a printed thick film electrode layer therebetween, the assemblage having been fired in air to effect volatilization of the organic materials, sintering of the inorganic particles and densification of the mixture.

9.  A thick film composition comprising the composition of claim 4 in which the organic medium is a solution comprising a resin and thixotropic agent dissolved in a solvent having a boiling point of 130-150°C and the composition has rheological properties suitable for printing.

10.  A capacitor comprising a ceramic substrate on which is printed a plurality of printed layers of the composition of claim 9, each pair of printed dielectric layers having a printed thick film electrode layer therebetween, the assemblage having been fired in air to effect volatilization of the organic medium, sintering of the inorganic particles and densification of the mixtures.